# EUROPÄISCHE PATENTSCHRIFT

(11) **EP 3 837 961 B1**
(45) Veröffentlichungstag und Bekanntmachung des Hinweises auf die Patenterteilung: **06.09.2023**
(21) Anmeldenummer: 20208202.0
(22) Anmeldetag: 17.11.2020
(51) Int. Cl.: A01F 15/00, B60D 1/24, A01B 69/00, A01B 69/06, A01B 69/04, A01F 15/08, B60D 1/62, A01B 67/00

(54) **KOMBINATION AUS EINEM ZUGFAHRZEUG UND EINEM GERÄT**
COMBINATION OF A TOWING VEHICLE AND A DEVICE
COMBINAISON D'UN VÉHICULE TRACTEUR ET D'UN APPAREIL

(30) Priorität: 20.12.2019 DE 102019220445
(43) Veröffentlichungstag der Anmeldung: 23.06.2021
(73) Patentinhaber: Deere & Company, Moline, IL 61265 (US)
(72) Erfinder: Wolff, Kilian, 68163 Mannheim (DE); Rossnagel, Daniel, 68163 Mannheim (DE)
(74) Vertreter: Holst, Sönke

(56) Entgegenhaltungen:
- EP-A1- 1 685 759
- US-A1- 2012 240 546
- US-A1- 2017 118 918
- US-A1- 2018 325 013

## Beschreibung

Die Erfindung betrifft eine Kombination aus einem Zugfahrzeug und einem gezogenen Gerät zur Aufnahme, Bündelung und Ablage von landwirtschaftlichen Material, gemäß dem Oberbegriff des Anspruchs 1.

### Stand der Technik

Bei manchen landwirtschaftlichen Arbeiten wird Material, insbesondere Erntegut, von einem Feld aufgenommen, gebündelt oder zu Ballen gepresst, und das gesammelte Material auf dem Feld abgelegt. Bei diesen Arbeiten finden oftmals Kombinationen aus einem Zugfahrzeug, in der Regel einem Ackerschlepper, und einem Gerät zur Aufnahme und Bündelung des Materials, z.B. einer Ballenpresse, Verwendung. Beim Ablegen des Materials kann es sinnvoll sein, das gesammelte Material nicht einfach in der jeweiligen Fahrtrichtung der Kombination aus Zugfahrzeug und Gerät abzulegen, sondern in einer anderen Richtung. Ein Beispiel dafür wäre eine Rundballenpresse, bei welcher der Ballen mit seiner Achse quer zu einem Hang abzulegen wäre, um zu verhindern, dass er den Hang hinunterrollt. Es kann auch sinnvoll sein, Ballen zur Lagerung nicht in Nord-Süd-, sondern in Ost-West-Richtung auszurichten (R. Huhnke, Round Bale Orientation Effects on Alfalfa, Applied Engineering in Agriculture 1993, S. 349-351), oder mit in einer bestimmten Orientierung der Achse des Ballens abzulegen, um nötigenfalls ein Wegrollen zu vermeiden (EP 2 149 293 A1). Auch könnte es sinnvoll sein, die Ballen in einer bestimmten Orientierung abzulegen, um sie nach einem speziellen Einsammel- oder Aufladeverfahren abzutransportieren, wozu man beispielsweise Rechteckballen quer zur Fahrtrichtung beim Ballenerzeugen ablegen könnte.

Im Stand der Technik (DE 10 2006 011 135 A1, DE 10 2009 047 585 A1) wird für eine Kombination aus einem Ackerschlepper und einer Rundballenpresse vorgeschlagen, die Neigung des gerade befahrenen Geländes mittels eines Sensors zu erfassen und durch eine Anzeigevorrichtung, die den Bediener anleitet oder eine Automatik die Ballenpresse oder deren Ablageeinrichtung mittels einer Knickdeichsel derart zu positionieren, dass die Rollachse des Ballens der Hangneigung folgt oder der Ballen mit seiner Stirnfläche auf dem Boden abgelegt wird. Hier wird somit nur die Ballenpresse bewegt, nicht der Ackerschlepper. Eine Positionierung einer Ballenpresse nur anhand einer Lenk- oder Knickdeichsel ist jedoch praktisch nicht machbar, jedenfalls wenn größere Winkel zwischen Ackerschlepper und Ballenpresse erforderlich werden, und eine gegenüber der Ballenpresse verstellbare Ablageeinrichtung ist technisch aufwändig.

Die EP 1 685 759 A1, US 2017/0118918 A1 und US 2018/0325013 A1 beschreiben Kombinationen aus Ackerschleppern und Ballenpressen, bei denen der Traktor selbsttätig entlang des Schwads gelenkt und auch die Ballenpresse gegenüber dem Traktor seitlich bewegt wird, um das Material in die Ballenbildungskammer einzuführen.

### Aufgabe der Erfindung

Die der Erfindung zu Grunde liegende Aufgabe wird darin gesehen, eine Kombination aus einem Zugfahrzeug und einem gezogenen Gerät zur Herstellung und Ablage von gebündeltem landwirtschaftlichen Material bereitzustellen, bei dem auf eine einfache und zeitsparende Weise eine Positionierung des Materials in einer gewünschten Position möglich wird.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird eine Kombination aus einem Zugfahrzeug und einem gezogenen Gerät zur Aufnahme, Bündelung und Ablage von landwirtschaftlichen Material vorgeschlagen, wobei:
das Gerät mit Mitteln zur Aufnahme des Materials von einem Feld, Mitteln zum Bündeln des Materials und mit Mitteln zum Ablegen des gebündelten Materials auf dem Erdboden ausgestattet ist,
die Orientierung des Geräts gegenüber dem Zugfahrzeug durch einen Aktor verstellbar ist,
und die Steuereinrichtung konfiguriert ist, Steuerdaten für den Aktor sowie zur Lenkung und/oder Geschwindigkeits- und/oder Fahrtrichtungskontrolle des Zugfahrzeugs bereitzustellen, die geeignet sind, das Gerät in eine zum Ablegen des Materials geeignete Orientierung zu verbringen.

Mit anderen Worten wird vorgeschlagen, durch eine Steuereinrichtung Steuerdaten bereitzustellen, anhand welcher nicht nur der Aktor, sondern auch eine Geschwindigkeits- und/oder Fahrtrichtungskontrolle ansteuerbar ist, um das Gerät in eine zur Ablage des Materials geeignete Orientierung um die Hochachse zu verbringen, sei es von Hand und/oder Fuß durch den Bediener oder durch eine Automatisierung. Auf diese Weise wird dem Bediener die Positionierung des Geräts in der geeigneten Orientierung erleichtert und der Ablagevorgang beschleunigt.

Die Steuereinrichtung kann konfiguriert sein, die Steuerdaten für den Aktor selbsttätig an den Aktor zu übersenden und/oder die Steuerdaten an eine Bedienerschnittstelle zur Bereitstellung von Anweisungen an einen Bediener zur manuellen Ansteuerung des Aktors zu übertragen.

Die Steuereinrichtung kann konfiguriert sein, die Steuerdaten zur Lenkung und/oder Geschwindigkeits- und/oder Fahrtrichtungskontrolle des Zugfahrzeugs an einen Lenkaktor des Zugfahrzeugs und/oder eine Geschwindigkeits- und/oder Fahrtrichtungskontrolleinrichtung des Zugfahrzeugs zu übersenden und/oder die Steuerdaten an eine Bedienerschnittstelle zur Bereitstellung von Anweisungen an einen Bediener zur manuellen Ansteuerung einer durch den Bediener betätigbaren Lenkung und/oder einer durch den Bediener betätigbaren Geschwindigkeits- und/oder Fahrtrichtungskontrolleinrichtung des Zugfahrzeugs zu übertragen.

Die Steuereinrichtung ist konfiguriert, während einer Endphase eines Vorgangs, bei dem das Material aufgenommen und gebündelt wird, Steuerdaten für den Aktor bereitzustellen, die dazu führen, dass das Gerät gegenüber dem Zugfahrzeug seitlich versetzt wird, und zwar nach rechts, wenn das Gerät gegenüber der aktuellen Orientierung des Geräts im Gegenuhrzeigersinn in die geeignete Orientierung zu drehen ist und nach links, wenn das Gerät gegenüber der aktuellen Orientierung des Geräts im Uhrzeigersinn in die geeignete Orientierung zu drehen ist. Die Steuereinrichtung kann konfiguriert sein, den seitlichen Versatz abhängig von einer Arbeitsbreite eines Gutaufnehmers des Geräts und der sensorisch ermittelten Breite eines Schwads des aufzunehmenden Materials anzusteuern.

Die Steuereinrichtung ist konfiguriert, nach dem Ende des Vorgangs, bei dem das Material aufgenommen und gebündelt wird, Steuerdaten zur Geschwindigkeitskontrolle des Zugfahrzeugs bereitzustellen, welche das Zugfahrzeug anhalten.

Die Steuereinrichtung ist konfiguriert, nach dem Ende des Vorgangs, bei dem das Material aufgenommen und gebündelt wird, Steuerdaten für den Aktor bereitzustellen, die dazu führen, dass das Gerät gegenüber dem Zugfahrzeug um die Hochachse in Richtung auf die geeignete Orientierung dreht. Die Steuereinrichtung kann vor dem Bereitstellen der Steuerdaten für den Aktor ein Anheben eines Gutaufnehmers des Geräts kommandieren.

Die Steuereinrichtung ist konfiguriert, nach dem durch Betätigen des Aktors bewerkstelligten Drehen des Geräts um die Hochachse, Steuerdaten zur Lenkung und Geschwindigkeits- und Fahrtrichtungskontrolle des Zugfahrzeugs bereitzustellen, die dazu führen, dass das Zugfahrzeug in eine gegenüber der Fahrtrichtung bei der Aufnahme des Materials umgekehrte Richtung fährt, und zwar mit einer bezüglich der bei der Aufnahme des Material geltenden Fahrtrichtung nach links gerichteten Fahrtrichtung, wenn das Gerät gegenüber der aktuellen Orientierung des Geräts im Gegenuhrzeigersinn in die geeignete Orientierung zu drehen ist und mit einer bezüglich der bei der Aufnahme des Material geltenden Fahrtrichtung nach rechts gerichteten Fahrtrichtung, wenn das Gerät gegenüber der aktuellen Orientierung des Geräts im Uhrzeigersinn in die geeignete Orientierung zu drehen ist

Die Steuereinrichtung ist konfiguriert, beim Rückwärtsfahren Steuerdaten zur Lenkung des Zugfahrzeugs bereitzustellen, die dazu führen, dass die Drehung des Zugfahrzeugs in die Gegenrichtung zur bisherigen Drehrichtung des Zugfahrzeugs verläuft, sobald der Winkel zwischen Zugfahrzeug und Gerät einen maximalen Winkel erreicht hat. Dieser Winkel kann insbesondere mit einem Rückkopplungssensor zur Erfassung des Winkels zwischen der Deichsel einerseits und dem Gerät und/oder dem Zugfahrzeug andererseits direkt sensorisch erfasst werden oder indirekt anhand einer abgefahrenen Strecke oder Zeit ermittelt werden.

Die Steuereinrichtung kann konfiguriert sein, Steuerdaten bereitzustellen, die dazu führen, dass eine Betätigung des Aktors und/oder ein Lenk- und/oder Rückwärtsfahrvorgang des Zugfahrzeugs beendet wird, wenn das Gerät die geeignete Orientierung erreicht hat.

Das Gerät ist eine Rundballenpresse und die Steuereinrichtung konfiguriert, den Ablauf der beschriebenen Sequenz derart zu bestimmen, dass ein vom Gerät abgelegter Rundballen mit seiner Symmetrieachse parallel zu einer Hangneigung des bearbeiteten Felds orientiert ist.

Der Aktor kann konfiguriert sein, den Winkel einer Deichsel zwischen dem Zugfahrzeug und dem Gerät gegenüber dem Gerät und/oder gegenüber dem Zugfahrzeug zu verstellen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Zugfahrzeugs mit einem gezogenen Gerät,

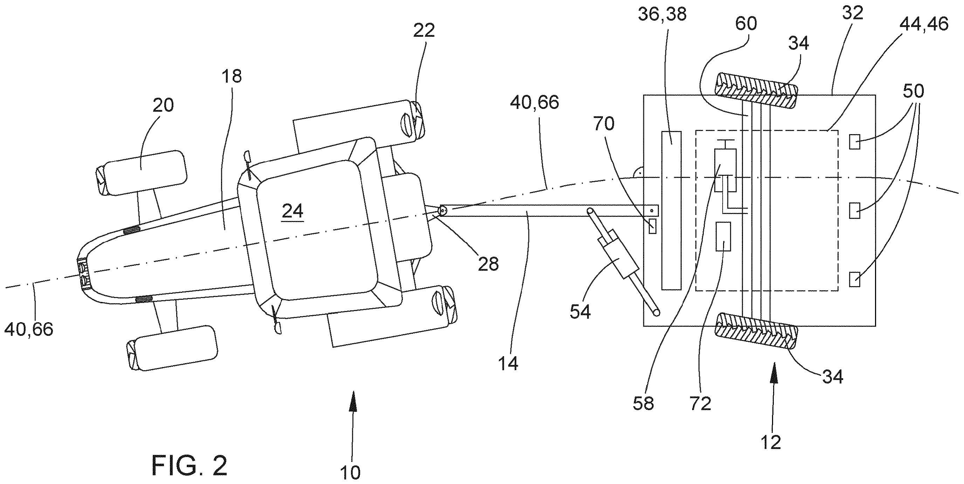

- Fig. 2: eine Draufsicht auf das Zugfahrzeug und das Gerät, und
- Fig. 3: ein Schema, das die Vorgehensweise der Steuereinrichtung des Geräts zeigt.

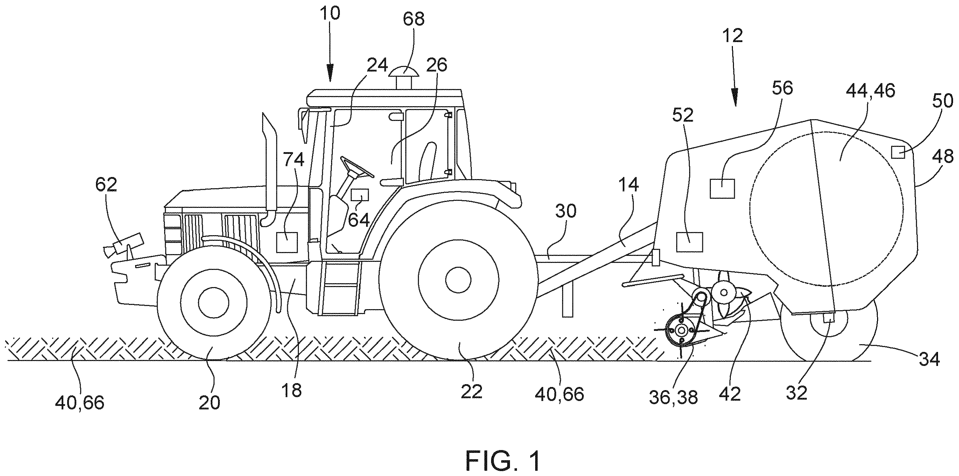

Die Figur 1 zeigt eine seitliche Ansicht eines landwirtschaftlichen Zugfahrzeugs 10 in Form eines Traktors und eines mittels einer Deichsel 14 an eine Anhängekupplung 28 des Zugfahrzeugs 10 gekoppelten Geräts 12 in Form einer Rundballenpresse variabler Presskammergröße, die zum Aufnehmen und Bündeln von landwirtschaftlichem Material (Erntegut in Form von Gras oder Heu o.ä., das in einem Schwad 40 auf dem Feld liegt) dient. Das Zugfahrzeug 10 baut sich auf einem tragenden Rahmen 18 auf, der sich auf lenkbaren Vorderrädern 20 und antreibbaren Hinterrädern 22 abstützt und eine Kabine 24 trägt, in der sich ein Bedienerarbeitsplatz 26 befindet.

Das Gerät 12 umfasst ein Fahrgestell 32, das sich über lenkbare Räder 34 auf dem Erdboden abstützt, ein Bearbeitungselement 36 in Form eines Gutaufnehmers 38 zur Aufnahme von in dem Schwad 40 auf dem Erdboden liegenden Erntegut und einen Förderer 42, der das vom Gutaufnehmer 38 aufgenommene Erntegut in einen Behälter 46 in Form eines Ballenpressraums 44 fördert, in dem das Erntegut gebündelt (d.h. gepresst) wird. Der Ballenpressraum 44 wird in an sich bekannter Weise durch Pressmittel (nicht gezeigt) in Form von Riemen begrenzt. Ein fertig gestellter Ballen kann durch eine nach oben schwenkbare Rücktür 48 (die auch durch einen Mechanismus zur Bewegung der Pressmittel im rückwärtigen Bereich des Ballenpressraums in eine Auswurfposition ergänzt oder ersetzt werden könnte) ausgeworfen und auf dem Feld abgelegt werden. Der mechanische Antrieb der angetriebenen Elemente des Geräts 12 folgt über eine Zapfwelle 30 vom Zugfahrzeug 10 her, obwohl auch ein Antrieb durch Elektromotore denkbar wäre, die vom Zugfahrzeug 10 her mit elektrischer Energie versorgt werden.

Über die Breite des Behälters 46 sind insgesamt drei Sensoren 50 verteilt, die zur Erfassung des Durchmessers des Ballens und/oder zur Erfassung der Spannung der Pressmittel dienen, die ebenfalls Informationen über die Verteilung des Ernteguts über die Breite des Behälters 46 enthält. Die Sensoren 50 sind mit einer Steuereinrichtung 52 verbunden, die sich an Bord des Geräts 12 befindet, aber auch an Bord des Zugfahrzeugs 10 lokalisiert sein könnte. Die Steuereinrichtung 52 ist über eine Ventilanordnung 56 (die sich auch an Bord des Zugfahrzeugs 10 befinden könnte) mit einem ersten Aktor 54 in Form eines Hydraulikzylinders verbunden, der einen Endes an der Deichsel 14 und anderen Endes am Fahrgestell 32 des Geräts 12 angelenkt ist. Die Steuereinrichtung 52 ist über die Ventilanordnung 56 außerdem mit einem (optionalen) zweiten Aktor 58 in Form eines Hydraulikzylinders verbunden, der mit einer Stange 60 zur Verschwenkung der Räder 34 des Geräts 12 um die Hochachse gekoppelt ist. Durch Rückkopplungssensoren 70, 72 wird die Steuereinrichtung 52 über die aktuellen Winkel der Deichsel 14 und der Räder 34 informiert. Der Rückkopplungssensor 70 zur Erfassung des Winkels der Deichsel 14 könnte auch zwischen der Deichsel 14 und dem Zugfahrzeug 10 an der Anhängekupplung 28 oder in deren Nähe angebracht oder durch eine Kamera ersetzt oder ergänzt werden.

An der Vorderseite des Zugfahrzeugs 10 ist eine Erfassungseinrichtung 62 in Form einer Kamera angebracht, die das Schwad 40 optisch erfasst und mit einem Bildverarbeitungssystem verbunden ist, das ein Lenksignal an eine Lenksteuerung 64 des Zugfahrzeugs 10 abgibt, die wiederum die lenkbaren Vorderräder 20 des Zugfahrzeugs 10 über einen geeigneten Aktor (nicht gezeigt) in einer Weise verstellt, dass die Längsmittelachse des Zugfahrzeugs 10 zumindest näherungsweise auf einer Solllinie 66 geführt wird, die der Längsachse des Schwads 40 entspricht. Bei einer anderen Ausführungsform sind Daten hinsichtlich der Position des Schwads in der Lenksteuerung 64 abgespeichert und eine Positionsbestimmungseinrichtung 68 (beispielsweise in Form einer GPS-Antenne) übersendet der Lenksteuerung 64 aktuelle Positionsinformationen, die gemeinsam mit den abgespeicherten Daten hinsichtlich der Position des Schwads von der Lenksteuerung 64 zur Ansteuerung des Aktors für die lenkbaren Vorderräder 20 dienen. Beide in diesem Absatz erwähnten Varianten können auch kombiniert werden (vgl. EP 1 266 553 A2). Die Lenksteuerung 64 übersendet der Steuereinrichtung 52 fortlaufend Daten hinsichtlich der seitlichen Position der Solllinie 66 gegenüber der Längsmittelachse des Zugfahrzeugs 10 und des zugehörigen Zeitpunkts der Erfassung und/oder der zugehörigen Position in Vorwärtsrichtung und ist dazu mit der Steuereinrichtung 52 über einen Bus verbunden. Eine Geschwindigkeits- und Fahrtrichtungskontrolleinrichtung 74 kontrolliert die Fahrgeschwindigkeit und Fahrtrichtung des Fahrzeugs, d.h. den Absolutwert der Fahrgeschwindigkeit des Zugfahrzeugs 10 und ob es vorwärts oder rückwärts fährt. Die bei der Erzeugung des Ballens von der Geschwindigkeits- und Fahrtrichtungskontrolleinrichtung 74 gewählte Geschwindigkeit des Zugfahrzeugs 10 und somit des Geräts 12 kann in an sich bekannter Weise von den Abmessungen und der Dichte des Schwads 40 abhängen, die durch die Erfassungseinrichtung 62 und ggf. zusätzliche Sensoren erfasst oder gemeinsam mit den Koordinaten des Schwads 40 im Vorab, beim vorhergehenden Arbeitsvorgang abgespeichert werden können.

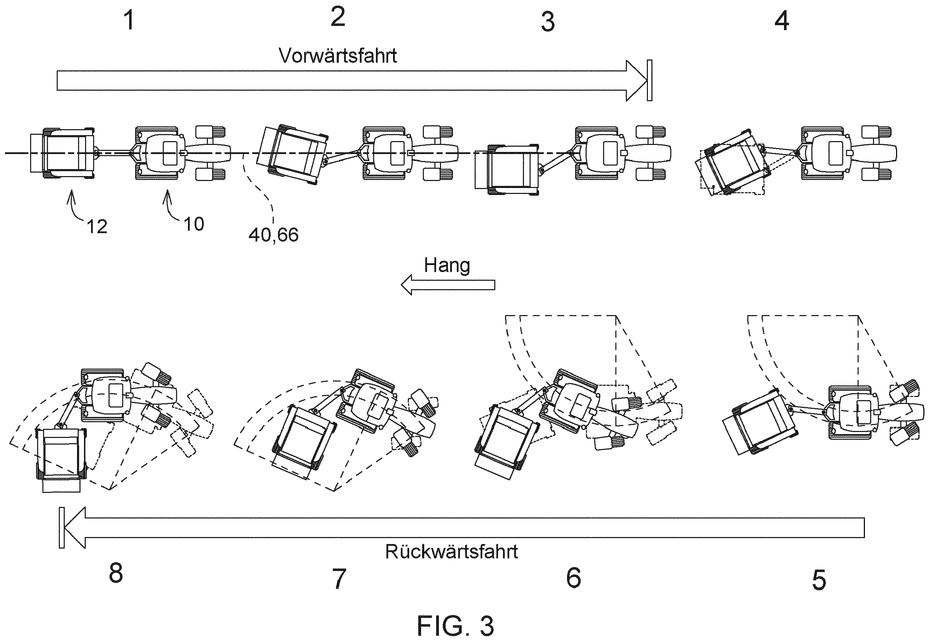

Die Vorgehensweise der Steuereinrichtung 52 beim Aufnehmen des Schwads 40 erfolgt in an sich bekannter Weise derart, dass beim Aufnehmen des Schwads 40 das Zugfahrzeug 10 entlang der Solllinie 66 geführt wird. Das Gerät 12 wird, kontrolliert durch die Steuereinrichtung 52 basierend auf den Signalen der Sensoren 50 und ggf. der Erfassungseinrichtung 62, durch den ersten Aktor 54 und den optionalen, zweiten Aktor 58 sukzessive gegenüber dem Zugfahrzeug 10 nach links und rechts bewegt, um den Ballenpressraum 44 über dessen Breite gleichmäßig zu füllen, denn die Breite des Schwads 40 ist üblicherweise kleiner als jene des Ballenpressraums 44. Hierbei kann analog zum Stand der Technik z.B. nach EP 1 926 364 A1 oder DE 10 2009 047 585 A1 vorgegangen werden. Die Figur 3 zeigt in der Phase 1 die übliche Aufnahme des Schwads 44.

Sobald der Ballen fertiggestellt ist, wird er aus dem Ballenpressraum 44 ausgeworfen, indem die Tür 48 geöffnet wird. In der Praxis ist das Feld, von dem das Schwad 40 aufgenommen und auf dem der fertige Ballen abgelegt wird, nicht in allen Fällen horizontal, sondern es kann geneigt sein. Bei der Figur 3 wird davon ausgegangen, dass es nach links geneigt ist, das Zugfahrzeug 10 somit genau bergauf fährt. Würde man den Ballen auswerfen, wenn das Gerät 12 mit seiner Längsmittelachse in Richtung der Hangneigung steht (wie es in der Phase 1 von Figur 3 der Fall ist), würde er letztendlich den Hang hinunterrollen, was aus mehreren Gründen, u.a. wegen der davon ausgehenden Gefahr, nicht gewünscht ist.

Das Gerät 12 wäre bei der in Figur 3 gezeigten Situation um 90° aus der in Phase 1 gezeigten Orientierung um die Hochachse zu drehen. Der bisherige, eine manuelle Kontrolle durch den Fahrer vorsehende Stand der Technik verlangt vom Fahrer, dass er das Gerät 12 durch manuelle Lenkeingriffe und Geschwindigkeitsvorgaben zurückstößt, um eine geeignete Orientierung des Geräts 12 gegenüber der Hangneigung zu erreichen, während bisherige Automationsvorschläge (DE 10 2006 011 135 A1, DE 10 2009 047 585 A1) sich lediglich auf eine selbsttätige Verstellung des Geräts 12 gegenüber dem Zugfahrzeug 10 durch die verstellbare Deichsel 14 bezogen haben, die - ohne jegliche Bewegung des Zugfahrzeugs 10 - aus einsichtigen Gründen nicht ausreicht, das Gerät 12 zu positionieren. Die lenkbare Deichsel 14 zwischen Gerät 12 und Zugfahrzeug erlaubt es - in Verbindung mit einer geeigneten Bewegungssteuerung des Zugfahrzeugs 10 - den Vorgang der Positionierung des Geräts 12 zu erleichtern, zu verkürzen und zu automatisieren. Die lenkbare Deichsel 14 hat darüber hinaus weitere Vorteile wie beispielsweise die bessere Spurtreue in Kurven sowie das oben erwähnte, sogenannte "weaving" zur optimierten Befüllung des Ballenpressraums 44, ohne dass der Bediener des Zugfahrzeugs 10 fortlaufenden seitlichen Bewegungen ausgesetzt wäre.

In der Figur 3 und der folgenden Beschreibung ist ein automatisierter Auswurfvorgang dargestellt, bei dem das Gerät 12 vor dem Auswerfen des Ballens parallel zum Hang gestellt wird. Der Auswurfvorgang bei der Fahrt am Hang soll vollständig automatisiert werden, sodass der Fahrer des Zugfahrzeugs 10 hierfür nicht mehr manuell eingreifen muss, obwohl es auch denkbar wäre, dem Fahrer an seinem Bedienerarbeitsplatz 26 optisch oder akustisch Anweisungen zu geben, damit er den Aktor 54 und die Eingabemittel der Geschwindigkeits- und Fahrtrichtungskontrolleinrichtung 74 analog zum beschriebenen, automatischen Ablauf bedienen kann.

Durch eine geeignete Sensorik (z.B. eine Trägheitsmesseinheit (IMU, inertial measuring unit), die in an sich bekannter Weise in das Gehäuse der Positionsbestimmungseinrichtung 68 integriert sein kann, bzw. digital zur Verfügung stehende Topografie-Informationen, die im Vorab oder während der Arbeit durch die - über den Bus mit der Steuereinrichtungt 52 verbundene - Positionsbestimmungseinrichtung 68 erzeugt werden, oder eine eigene Sensorik des Geräts 12) wird die Hangneigung (sowohl der Nickwinkel in Vorwärtsrichtung als auch der Rollwinkel in Querrichtung zur Fahrtrichtung der Kombination aus Zugfahrzeug 10 und Gerät 12) erfasst.

Basierend darauf wird eine automatisierte Sequenz ausgeführt, um das Gerät 12 vor dem Auswerfen des Ballens in eine geeignete Position zu bringen, in welcher der Ballen ohne die Problematik des Wegrollens ausgeworfen werden kann. Um diese Sequenz möglichst effektiv zu gestalten, ist die Lösung mit der geringsten Fahrstrecke zu favorisieren, da eine längere Fahrstrecke mehr Zeit in Anspruch nimmt und somit den kompletten Prozess unnötig verlängert. Die Figur 3 verdeutlicht den im Folgenden beschriebenen Ablauf.

Während des Erzeugens des Ballens fährt die Kombination aus Zugfahrzeug 10 und Gerät 12 entlang der Sollinie 66 bzw. dem Schwad 40. Basierend auf den Signalen der Sensoren 50 des Geräts 12 wird erkannt, wenn das Gerät 12 sich in der Endphase der Erzeugung des Ballens befindet, d.h. der Ballen innerhalb einer Zeitspanne von einigen Sekunden den gewünschten Durchmesser erreicht haben wird. Mit entsprechendem Vorlauf, d.h. während dieser Endphase, wird die Deichsel 14 durch Betätigung des Aktors 54 so ausgelenkt (Phase 2 in Figur 3), dass das Gerät 12 beim Erreichen des gewünschten Durchmessers eine quasi-statische Position versetzt neben dem Traktorpfad erreicht hat (Phase 3 der Figur 3). In welche Richtung das Gerät 12 um die Hochachse zu drehen ist, um es in die von der Steuereinrichtung 52 ermittelte (Soll-) Orientierung um die Hochachse zu verbringen, ist abhängig vom Nick- und Rollwinkel des bearbeiteten Geländes: bei Bergauffahrt muss das Gerät 12 entsprechend dem gemessenen Rollwinkel hangaufwärts versetzt werden, damit es letztendlich mit seiner Längsmittelebene quer zum Hang orientiert ist (Phase 8 in Figur 3). Bei Bergabfahrt muss das Gerät 12 gemäß dem gemessenen Rollwinkel bergab versetzt werden. Der seitliche Versatz des Geräts 12 in Phase 3 von Figur 3 ist so gewählt, dass das Gerät 12 rechts neben dem Zugfahrzeug 10 fährt und steht, was die nachfolgende Drehung um die Hochachse im Gegenuhrzeigersinn vereinfacht, wie sich aus den nachfolgenden Phasen der Figur 3 ergibt. Soll das Gerät im Uhrzeigersinn um die Hochachse gedreht werden, würde das Gerät 12 in der Phase 3 links vom Zugfahrzeug positioniert. Die Richtung in welche die Ballenpresse in den Phasen 2 und 3 ausgelenkt wird, kann unter bestimmten Voraussetzungen jedoch auch vom zur Verfügung stehenden Platz beeinflusst werden um die Ablage des Ballens zu nah an Hindernissen, Feldgrenzen oder benachbarten Schwaden zu vermeiden. Der seitliche Versatz zwischen Zugfahrzeug 10 und Gerät 12 wird insbesondere so gewählt, dass kein Erntegut auf dem Feld liegenbleibt, d.h. das Schwad 40 innerhalb der Arbeitsbreite des Aufnehmers 38 bleibt. Hierzu kann ein Kamerasystem (z.B. die Erfassungseinrichtung 62) verwendet werden, um die Breite des Schwads 44 zu ermitteln und an die Steuereinrichtung 52 zu übersenden, die im beschriebenen Sinne dimensionierte Signale für den Aktor 54 bereitstellt.

Nachdem das Gespann in Phase 3 zum Stillstand gekommen ist, wird die Deichsel 14 bei stehendem Zugfahrzeug 10 durch die Steuereinrichtung 52 mittels einer Kommandierung des Aktors 54 in die entgegengesetzte Richtung ausgelenkt (Phase 4), sodass das Gerät 12 bereits eine gewisse Drehung in die gewünschte Richtung durchführt. Da der Gutaufnehmer 38 hierbei eine laterale Bewegung ausführt, kann er durch einen geeigneten Aktor (s. DE 10 2016 002 123 A1) zunächst angehoben werden. Je nach Dimensionen und Freiheitsgrad der Deichsel 14 wird durch diese Bewegung bereits eine entsprechende Änderung der Orientierung des Geräts 12 gegenüber dem Hang und somit des Nickwinkels erreicht. Diese Drehung ist unter Umständen bereits ausreichend, um den Ballen gefahrlos auswerfen zu können.

Ist dies nicht der Fall, so kann durch entsprechende Ansteuerung der Geschwindigkeits- und Fahrtrichtungskontrolleinrichtung 74 des Zugfahrzeugs 10 durch die Steuereinrichtung 52 die Lenkung des Zugfahrzeugs 10 insbesondere maximal eingeschlagen (nach links, wie in der Phase 5 und 6 gezeigt, wenn das Gerät 12 im Gegenuhrzeigersinn zu drehen ist, und nach rechts, wenn das Gerät 12 im Uhrzeigersinn zu drehen ist) und eine Rückwärtsfahrt des Zugfahrzeugs 10 und somit des Geräts 12 veranlasst werden, um das Zugfahrzeug auf die in den Phasen 5 und 6 auf die dort dargestellte Kreisbahn zu bringen. Die Lenkung des Zugfahrzeugs 10 wird durch die Steuereinrichtung 52 umgekehrt, wenn wie in der Phase 7 dargestellt, ein maximaler Winkel von 90° zwischen der Längsachse des Zugfahrzeugs 10 und der Längsachse des Geräts 12 erreicht ist, wobei der maximale Winkel auch größer oder kleiner als 90° sein kann und u.a. von der Geometrie der Deichsel 14 und des Zugfahrzeugs 10 abhängt und so gewählt werden kann, dass ein Anstoßen der Deichsel 14 am Zugfahrzeug 10 und/oder ein Einknicken des Gespanns aus Zugfahrzeug 10 und Gerät 12 durch zu große Winkel vermieden wird. In der Phase 8 ist die letztlich d9ie Orientierung des Geräts 12 genau rechtwinklig zur ursprünglichen Fahrtrichtung und quer zur Hangneigung. Diese Position ist sinnvoll, wenn die ursprüngliche Fahrtrichtung genau hangaufwärts bzw. hangabwärts verläuft, ansonsten kann die Sequenz bereits zuvor abgebrochen werden, wenn die zum Ablegen des Ballens geeignete (Soll-) Orientierung des Geräts 12 um die Hochachse erreicht ist, was anhand des gemessenen Nickwinkels des Geräts 12 bestimmt werden kann. Die beschriebene Sequenz wird demnach beendet, sobald der Nickwinkel des Geräts 12 kleiner als ein festgelegter Schwellwert ist, der das ungefährliche Auswerfen des Ballens ermöglicht. Es sei noch angemerkt, dass im Fall einer genau parallel zur Fahrtrichtung der Kombination während der Aufnahme des Schwads 40 verlaufenden Hangneigung, wie sie in der Figur 3 gezeigt wird, auch eine Drehung des Geräts 12 im Uhrzeigersinn möglich wäre.

Der Ballen wird schließlich aus dem Gerät 12 ausgeworfen und die Schritte 8 bis 5 der in Figur 3 gezeigten Sequenz jeweils in umgekehrter Richtung (durch entsprechende Kontrolle des Aktors 54 für die Deichsel 14 und die Geschwindigkeits- und Fahrtrichtungskontrolleinrichtung 74) durchgeführt, um die Kombination aus Zugfahrzeug 10 und Gerät 12 auf dem Schwad 44 auszurichten und weiter entlang des Schwads 40 zu bewegen und Erntegut zu bündeln.

Die vorstehend beschriebene, abgefahrene Sequenz beruht darauf, dass die Steuerung 52 die Aktorik (Aktor 54 der Deichsel, ggf. unterstützt durch den optionalen Aktor 58 für die Lenkung der Räder 34 des Geräts 12, und Geschwindigkeits- und Fahrtrichtungskontrolleinrichtung 74 des Zugfahrzeugs 10) basierend auf Signalen von Sensoren ansteuert, nämlich den Sensoren 50 für die Erfassung der Ballengröße zur Veranlassung der Phasen 1 bis 3, dem Rückkopplungssensor 70 zur Erfassung der Position der Deichsel 14 zu Steuerung des Versatzes in der Phase 2 und 3, sowie zum Wechsel von Phase 6 auf Phase 7, sowie der Sensorik zur Erfassung des Nickwinkels des Geräts 12 zur Beendung der Sequenz und zum Auswerfen des Ballens. Die verschiedenen Werte können durch die Sensoren direkt erfasst werden, oder sie werden indirekt erfasst, z.B. durch Messen zurückgelegter Strecken oder Geschwindigkeiten und zugehöriger Zeiten sowie der Lenkwinkel.

Anstelle dieser durch direkt oder indirekt erfasste Messwerte gesteuerten Sequenz ist beispielsweise auch ein auf Signalen der Positionsbestimmungseinrichtung 68 - ggf. im Zusammenwirken mit anderen Sensoren, die auf dem Gerät 12, dem Zugfahrzeug 10 und/oder der Deichsel 14 angebracht sind, um insbesondere den Roll- und/oder Nickwinkel zu erfassen - basierender, geregelter Ablauf anhand eines durch die Steuereinrichtung 52 geplanten und selbsttätig abgefahrenen Pfades denkbar, der anhand der bekannten bzw. sensorisch ermittelten, dreidimensionalen Topographie des Feldes so gewählt wird, dass letztendlich der Ballen mit einer geeigneten Orientierung abgelegt wird.

Bei der hier beschriebenen Vorgehensweise wird eine Steuerung von Funktionen des Zugfahrzeugs 10 durch die Steuereinrichtung 52 des Geräts 12 verwendet, wozu eine Verwendung der Norm ISO 17783 und insbesondere des so genannten TIM-Standards (Tractor-Implement-Management) vorgesehen ist, um die Lenkung, das Anheben des Aufnehmers 38 über die Hydraulik des Zugfahrzeugs 10, die Lenkung der Deichsel über den Aktor 54, der über ein an Bord des Zugfahrzeugs 10 vorgesehenes, durch die Steuereinrichtung 52 über den Bus gesteuertes Kontrollventil an Bord des Zugfahrzeugs 12 über die Hydraulik des Zugfahrzeugs 12 kontrolliert werden kann, und die Kontrolle der Geschwindigkeit der Kombination zu automatisieren. Es sind aber auch andere Umsetzungen für den komplett automatisierten oder teilautomatisierten Ablauf denkbar, z.B. mittels einer Kontrolleinheit des Zugfahrzeugs 10 oder die oben beschriebenen Anweisungen an den Fahrer. Neben dem Vermeiden des Hinabrollens des Ballens wird außerdem erreicht, dass der Traktorfahrer von seiner Position in der Kabine eine bessere Perspektive auf den Auswurf-Vorgang hat, was selbst im flachen Gelände vorteilhaft sein kann.

Das Gerät 12 ist hier als Rundballenpresse ausgeführt, könnte aber auch beliebige andere Erntegüter als Heu oder Gras aufsammeln und bündeln. Weiterhin muss die gewünschte Orientierung des abgelegten, gebündelten Materials nicht unbedingt (nur) an die Hangneigung angepasst werden, sondern könnte beispielsweise im flachen Gelände so gewählt werden, dass das gebündelte Material möglichst wenig durch Wettereinflüsse beeinträchtigt wird oder leichter eingesammelt werden kann. Sollte das Zugfahrzeug 10, anstelle lenkbare Räder 20 aufzuweisen, als Knicklenker ausgeführt oder mit Raupenlaufwerken ausgestattet sein, die zur Lenkung mit unterschiedlicher Geschwindigkeit antreibbar sind, erfolgt die Ansteuerung der zugehörigen Aktoren analog zur obigen Beschreibung.

## Patentansprüche

1. Kombination aus einem Zugfahrzeug (10) und einem gezogenen Gerät (12) zur Aufnahme, Bündelung und Ablage von landwirtschaftlichen Material, wobei:
das Gerät (12) eine Rundballenpresse mit Mitteln (38) zur Aufnahme des Materials von einem Feld, Mitteln (44) zum Bündeln des Materials und mit Mitteln (48) zum Ablegen des gebündelten Materials auf dem Erdboden ausgestattet ist,
die Orientierung des Geräts (12) gegenüber dem Zugfahrzeug (10) durch einen Aktor (54) verstellbar ist, der Teil des Geräts ist,
und eine Steuereinrichtung (52), die sich an Bord des Geräts (12) befindet oder an Bord des Zugfahrzeugs (10) lokalisiert ist, konfiguriert ist, Steuerdaten für den Aktor (54) bereitzustellen, die geeignet sind, das Gerät (12) in eine Orientierung um die Hochachse zu verbringen, die zum Ablegen des gebündelten Materials geeignet ist, sodass ein vom Gerät (12) abgelegter Rundballen mit seiner Symmetrieachse parallel zu einer Hangneigung des bearbeiteten Felds orientiert ist,
wobei die Steuereinrichtung (52) konfiguriert ist, zusätzlich Steuerdaten zur Lenkung und/oder Geschwindigkeits- und/oder Fahrtrichtungskontrolle des Zugfahrzeugs (10) bereitzustellen, die geeignet sind, das Gerät (12) in die geeignete Orientierung zu verbringen,
und wobei die Steuereinrichtung (52) konfiguriert ist, nach dem Ende des Vorgangs, bei dem das Material aufgenommen und gebündelt wird, Steuerdaten zur Geschwindigkeitskontrolle des Zugfahrzeugs (10) bereitzustellen, welche dazu führen, dass das Zugfahrzeug (10) anhält,
**dadurch gekennzeichnet, dass** die Steuereinrichtung (52) konfiguriert ist, während einer Endphase eines Vorgangs, bei dem das Material aufgenommen und gebündelt wird, Steuerdaten für den Aktor (54) bereitzustellen, die dazu führen, dass das Gerät (12) gegenüber dem Zugfahrzeug (10) seitlich versetzt wird, und zwar nach rechts versetzt, wenn das Gerät (10) gegenüber der bei der Aufnahme des Materials eingenommenen Fahrtrichtung im Gegenuhrzeigersinn zu drehen ist, um es in die geeignete Orientierung zu verbringen und nach links versetzt, wenn das Gerät (10) gegenüber der bei der Aufnahme des Materials eingenommenen Fahrtrichtung im Uhrzeigersinn zu drehen ist, um es in die geeignete Orientierung zu verbringen,
dass die Steuereinrichtung (52) konfiguriert ist, nach dem Ende des Vorgangs, bei dem das Material aufgenommen und gebündelt wird, Steuerdaten für den Aktor (54) bereitzustellen, die dazu führen, dass das Gerät (12) gegenüber dem Zugfahrzeug (10) um die Hochachse in Richtung auf die geeignete Orientierung dreht,
dass die Steuereinrichtung (52) konfiguriert ist, nach dem durch Betätigen des Aktors (54) bewerkstelligten Drehen des Geräts (12) um die Hochachse Steuerdaten zur Lenkung und Geschwindigkeits- und Fahrtrichtungskontrolle des Zugfahrzeugs (10) bereitzustellen, die dazu führen, dass das Zugfahrzeug (10) in eine gegenüber der Fahrtrichtung bei der Aufnahme des Materials umgekehrte Richtung fährt, und zwar mit einer bezüglich der bei der Aufnahme des Material geltenden Fahrtrichtung nach links gerichteten Fahrtrichtung, wenn das Gerät (12) gegenüber der aktuellen Orientierung des Geräts (12) im Gegenuhrzeigersinn in die geeignete Orientierung zu drehen ist und mit einer bezüglich der bei der Aufnahme des Material geltenden Fahrtrichtung nach rechts gerichteten Fahrtrichtung, wenn das Gerät (12) gegenüber der aktuellen Orientierung des Geräts (12) im Uhrzeigersinn in die geeignete Orientierung zu drehen ist,
und dass die Steuereinrichtung (52) konfiguriert ist, beim Rückwärtsfahren Steuerdaten zur Lenkung des Zugfahrzeugs (10) bereitzustellen, die dazu führen, dass die Drehung des Zugfahrzeugs (10) in die Gegenrichtung zur bisherigen Drehrichtung verläuft, sobald der Winkel zwischen Zugfahrzeug (10) und Gerät (12) einen maximalen Winkel erreicht hat.

2. Kombination nach Anspruch 1, wobei die Steuereinrichtung (52) konfiguriert ist, die Steuerdaten für den Aktor (54) selbsttätig an den Aktor (54) zu übersenden und/oder die Steuerdaten an eine Bedienerschnittstelle zur Bereitstellung von Anweisungen an einen Bediener zur manuellen Ansteuerung des Aktors (54) zu übertragen.

3. Kombination nach Anspruch 1 oder 2, wobei die Steuereinrichtung (52) konfiguriert ist, die Steuerdaten zur Lenkung und/oder Geschwindigkeits- und/oder Fahrtrichtungskontrolle des Zugfahrzeugs (10) an einen Lenkaktor des Zugfahrzeugs (10) und/oder eine Geschwindigkeits- und/oder Fahrtrichtungskontrolleinrichtung (74) des Zugfahrzeugs (10) zu übersenden und/oder die Steuerdaten an eine Bedienerschnittstelle zur Bereitstellung von Anweisungen an einen Bediener zur manuellen Ansteuerung einer durch den Bediener betätigbaren Lenkung und/oder einer durch den Bediener betätigbaren Geschwindigkeits- und/oder Fahrtrichtungskontrolleinrichtung des Zugfahrzeugs (10) zu übertragen.

4. Kombination nach einem der Ansprüche 1 bis 3, wobei die Steuereinrichtung (52) konfiguriert ist, den seitlichen Versatz abhängig von einer Arbeitsbreite eines Gutaufnehmers (38) des Geräts (12) und der sensorisch ermittelten Breite eines Schwads (44) des aufzunehmenden Materials anzusteuern.

5. Kombination nach einem der Ansprüche 1 bis 4, wobei die Steuereinrichtung (52) konfiguriert ist, vor dem Bereitstellen der Steuerdaten für den Aktor (54) ein Anheben eines Gutaufnehmers (38) des Geräts (12) zu kommandieren.

6. Kombination nach einem der Ansprüche 1 bis 5, wobei der Winkel zwischen Zugfahrzeug (10) und Gerät (12) mit einem Rückkopplungssensor (70) zur Erfassung des Winkels zwischen der Deichsel (14) einerseits und dem Gerät (12) und/oder dem Zugfahrzeug (10) andererseits sensorisch erfassbar oder anhand einer abgefahrenen Strecke oder Zeit ermittelbar ist.

7. Kombination nach einem der Ansprüche 1 bis 6, wobei die Steuereinrichtung (52) konfiguriert ist, Steuerdaten bereitzustellen, die dazu führen, dass eine Betätigung des Aktors (54) und/oder ein Lenk- und/oder Rückwärtsfahrvorgang des Zugfahrzeugs (10) beendet wird, wenn das Gerät (12) die geeignete Orientierung erreicht hat.

8. Kombination nach einem der vorhergehenden Ansprüche, wobei die Steuereinrichtung (52) konfiguriert ist, die Steuerdaten für den Aktor (54) und die Lenkung und/oder Geschwindigkeits- und/oder Fahrtrichtungskontrolle basierend auf sensorisch erfassten und/oder zuvor abgespeicherten Werten hinsichtlich der dreidimensionalen Topographie des Felds und direkt oder indirekt erfassten Daten für das Gerät (12) und/oder das Zugfahrzeug (10) und/oder einem basierend auf der Topographie des Felds geplantem Weg anzusteuern.

9. Kombination nach einem der vorhergehenden Ansprüche, wobei der Aktor (54) konfiguriert ist, den Winkel einer Deichsel (14) zwischen dem Zugfahrzeug (10) und dem Gerät (12) gegenüber dem Gerät (12) und/oder gegenüber dem Zugfahrzeug (10) zu verstellen.

## Claims

1. Combination of a towing vehicle (10) and a towed implement (12) for picking up, bundling and depositing agricultural material, wherein:
the implement (12), a roundbaler, is provided with means (38) for picking up the material from a field, means (44) for bundling the material and with means (48) for depositing the bundled material on the ground,
the orientation of the implement (12) relative to the towing vehicle (10) is adjustable by an actuator (54), which is part of the implement,
and a control device (52), which is located on board the implement (12) or is located on board the towing vehicle (10), is configured to provide control data for the actuator (54) which are suitable for moving the implement (12) about the vertical axis into an orientation which is appropriate for depositing the bundled material, so that a round bale deposited by the implement (12) is oriented with its axis of symmetry parallel to a slope inclination of the cultivated field,
wherein the control device (52) is configured additionally to provide control data for the steering and/or for controlling the speed and/or direction of travel of the towing vehicle (10) which are suitable for moving the implement (12) into the appropriate orientation,
and wherein the control device (52) is configured to provide control data for controlling the speed of the towing vehicle (10) after the end of the procedure in which the material is picked up and bundled which result in the towing vehicle (10) being brought to a standstill,
**characterized in that** the control device (52) is configured to provide control data for the actuator (54) during an end phase of a procedure in which the material is picked up and bundled which result in the implement (12) being laterally offset relative to the towing vehicle (10), to be precise offset to the right when the implement (10) has to be rotated counterclockwise relative to the direction of travel adopted when picking up the material in order to move the implement into the appropriate orientation and offset to the left when the implement (10) has to be rotated clockwise relative to the direction of travel adopted when picking up the material in order to move the implement into the appropriate orientation,
**in that** the control device (52) is configured to provide control data for the actuator (54) after the end of the procedure in which the material is picked up and bundled which result in the implement (12) rotating relative to the towing vehicle (10) about the vertical axis in the direction of the appropriate orientation,
**in that** the control device (52) is configured to provide control data for steering and for controlling the speed and direction of travel of the towing vehicle (10) after the rotation of the implement (12) about the vertical axis effected by actuating the actuator (54) which result in the towing vehicle (10) travelling in a reverse direction relative to the direction of travel when picking up the material, to be precise in a direction of travel directed to the left relative to the direction of travel relevant for the pick-up of the material when the implement (12) has to be rotated counterclockwise into the appropriate orientation relative to the current orientation of the implement (12) and in a direction of travel directed to the right relative to the direction of travel relevant for the pick-up of the material when the implement (12) has to be rotated clockwise into the appropriate orientation relative to the current orientation of the implement (12),
and **in that** the control device (52) is configured to provide control data for steering the towing vehicle (10) during reverse travel which result in the rotation of the towing vehicle (10) running in the opposite direction to the previous rotational direction as soon as the angle between the towing vehicle (10) and the implement (12) has reached a maximum angle.

2. Combination according to Claim 1, wherein the control device (52) is configured to transmit the control data for the actuator (54) automatically to the actuator (54) and/or to transmit the control data to a user interface for providing instructions to an operator for manual activation of the actuator (54).

3. Combination according to Claim 1 or 2, wherein the control device (52) is configured to transmit the control data for the steering and/or for controlling the speed and/or direction of travel of the towing vehicle (10) to a steering actuator of the towing vehicle (10) and/or a device for controlling the speed and/or direction of travel (74) of the towing vehicle (10) and/or to transmit the control data to a user interface for providing instructions to an operator for manual activation of steering which can be actuated by the operator and/or a device for controlling the speed and/or direction of travel of the towing vehicle (10) which can be actuated by the operator.

4. Combination according to one of Claims 1 to 3, wherein the control device (52) is configured to activate the lateral offset dependent on a working width of a crop pick-up system (38) of the implement (12) and the width determined by sensor of a swath (44) of material to be picked up.

5. Combination according to one of Claims 1 to 4, wherein the control device (52) is configured to issue a command for lifting up a crop pick-up system (38) of the implement (12) before providing the control data for the actuator (54).

6. Combination according to one of Claims 1 to 5, wherein the angle between the towing vehicle (10) and the implement (12) can be detected by sensor using a feedback sensor (70) for detecting the angle between the drawbar (14) on the one hand and the implement (12) and/or the towing vehicle (10) on the other hand or can be determined on the basis of a distance passed through or a time.

7. Combination according to one of Claims 1 to 6, wherein the control device (52) is configured to provide control data which result in an actuation of the actuator (54) and/or a steering procedure and/or reverse travel of the towing vehicle (10) being terminated when the implement (12) has reached the appropriate orientation.

8. Combination according to one of the preceding claims, wherein the control device (52) is configured to activate the control data for the actuator (54) and the steering and/or the control of the speed and/or direction of travel based on values detected by sensor and/or previously stored with regard to the three-dimensional topography of the field and directly or indirectly detected data for the implement (12) and/or the towing vehicle (10) and/or a planned path based on the topography of the field.

9. Combination according to one of the preceding claims, wherein the actuator (54) is configured to adjust the angle of a drawbar (14) between the towing vehicle (10) and the implement (12) relative to the implement (12) and/or relative to the towing vehicle (10).

## Revendications

1. Combinaison d'un véhicule tracteur (10) et d'un instrument tracté (12) destiné à ramasser, à lier et à déposer des matières agricoles, dans laquelle :
l'instrument (12) est une presse à balles rondes équipée de moyens (38) pour ramasser la matière sur un champ, de moyens (44) pour lier la matière et de moyens (48) pour déposer la matière liée au sol,
l'orientation de l'instrument (12) par rapport au véhicule tracteur (10) est réglable par un actionneur (54) qui fait partie de l'instrument,
et un dispositif de commande (52) qui se trouve à bord de l'instrument (12) ou est localisé à bord du véhicule tracteur (10), qui est configuré pour fournir des données de commande destinées à l'actionneur (54) qui permettent d'amener l'instrument (12) dans une orientation autour de l'axe vertical qui convient à la dépose de la matière liée de sorte qu'une balle ronde déposée par l'instrument (12) est orientée avec son axe de symétrie en parallèle à une pente du champ labouré,
dans laquelle le dispositif de commande (52) est configuré pour fournir en outre des données de commande pour la direction et/ou le contrôle de vitesse et/ou de direction de déplacement du véhicule tracteur (10) qui permettent d'amener l'instrument (12) dans l'orientation appropriée,
et dans laquelle, à l'issue de l'opération pendant laquelle la matière est ramassée et liée, le dispositif de commande (52) est configuré pour fournir des données de commande pour le contrôle de vitesse du véhicule tracteur (10) qui font que le véhicule tracteur (10) s'arrête,
**caractérisée en ce que** pendant une phase finale d'une opération pendant laquelle la matière est ramassée et liée, le dispositif de commande (52) est configuré pour fournir des données de commande destinées à l'actionneur (54) qui font que l'instrument (12) est décalé latéralement par rapport au véhicule tracteur (10), notamment décalé vers la droite, lorsque l'instrument (10) doit pivoter dans le sens antihoraire par rapport à la direction de déplacement occupée lors du ramassage de la matière afin de l'amener vers l'orientation appropriée, et décalé vers la gauche lorsque l'instrument (10) doit pivoter dans le sens horaire par rapport à la direction de déplacement occupée lors du ramassage de la matière afin de l'amener vers l'orientation appropriée,
**en ce qu'**à l'issue de l'opération pendant laquelle la matière est ramassée et liée, le dispositif de commande (52) est configuré pour fournir des données de commande destinées à l'actionneur (54) qui font que l'instrument (12) pivote par rapport au véhicule tracteur (10) autour de l'axe vertical en direction de l'orientation appropriée,
**en ce qu'**après le pivotement de l'instrument (12) autour de l'axe vertical, réalisé par l'actionnement de l'actionneur (54), le dispositif de commande (52) est configuré pour fournir des données de commande pour la direction et le contrôle de vitesse et direction de déplacement du véhicule tracteur (10) qui font que le véhicule tracteur (10) se déplace dans une direction opposée par rapport à la direction de déplacement lors du ramassage de la matière, notamment dans une direction de déplacement orientée vers la gauche par rapport à la direction de déplacement valable lors du ramassage de la matière lorsque l'instrument (12) doit pivoter dans le sens antihoraire vers l'orientation appropriée par rapport à l'orientation actuelle de l'instrument (12), et dans une direction de déplacement orientée vers la droite par rapport à la direction de déplacement valable lors du ramassage de la matière lorsque l'instrument (12) doit pivoter dans le sens horaire vers l'orientation appropriée par rapport à l'orientation actuelle de l'instrument (12),
et **en ce qu'**en marche arrière, le dispositif de commande (52) est configuré pour fournir des données de commande pour la direction du véhicule tracteur (10) qui font que le pivotement du véhicule tracteur (10) est effectué dans le sens opposé au sens de pivotement précédent dès que l'angle entre le véhicule tracteur (10) et l'instrument (12) a atteint un angle maximal.

2. Combinaison selon la revendication 1, dans laquelle le dispositif de commande (52) est configuré pour envoyer automatiquement à l'actionneur (54) les données de commande destinées à l'actionneur (54) et/ou pour transmettre les données de commande à une interface utilisateur afin de fournir des instructions à un utilisateur pour le pilotage manuel de l'actionneur (54).

3. Combinaison selon la revendication 1 ou 2, dans laquelle le dispositif de commande (52) est configuré pour envoyer les données de commande pour la direction et/ou le contrôle de vitesse et/ou de direction de déplacement du véhicule tracteur (10) à un actionneur de direction du véhicule tracteur (10) et/ou à un dispositif de contrôle de vitesse et de direction de déplacement (74) du véhicule tracteur (10), et/ou pour transmettre les données de commande à une interface utilisateur afin de fournir des instructions à un utilisateur pour le pilotage manuel d'une direction pouvant être actionnée par l'utilisateur et/ou à un dispositif de contrôle de vitesse et/ou de direction de déplacement pouvant être actionné par l'utilisateur du véhicule tracteur (10).

4. Combinaison selon l'une quelconque des revendications 1 à 3, dans laquelle le dispositif de commande (52) est configuré pour piloter le décalage latéral en fonction d'une largeur de travail d'un dispositif de ramassage (38) de l'instrument (12) et en fonction de la largeur établie par capteur d'un andain (44) de la matière à ramasser.

5. Combinaison selon l'une quelconque des revendications 1 à 4, dans laquelle le dispositif de commande (52) est configuré pour ordonner un relèvement d'un dispositif de ramassage (38) de l'instrument (12) avant la fourniture des données de commande destinées à l'actionneur (54).

6. Combinaison selon l'une quelconque des revendications 1 à 5, dans laquelle l'angle entre le véhicule tracteur (10) et l'instrument (12) peut être détecté par capteur à l'aide d'un capteur de rétroaction (70) pour détecter l'angle entre la barre d'attelage (14) d'une part et l'instrument (12) et/ou le véhicule tracteur (10) d'autre part ou peut être déterminé à l'aide d'un trajet parcouru ou d'un délai.

7. Combinaison selon l'une quelconque des revendications 1 à 6, dans laquelle le dispositif de commande (52) est configuré pour fournir des données de commande qui font qu'un actionnement de l'actionneur (54) et/ou une opération de braquage et/ou de marche arrière du véhicule tracteur (10) est achevée lorsque l'instrument (12) a atteint l'orientation appropriée.

8. Combinaison selon l'une quelconque des revendications précédentes, dans laquelle le dispositif de commande (52) est configuré pour piloter les données de commande destinées à l'actionneur (54) et à la direction et/ou au contrôle de vitesse et/ou de direction de déplacement sur la base de valeurs détectées par capteur et/ou préalablement stockées concernant la topographie tridimensionnelle du champ et de données détectées directement ou indirectement pour l'instrument (12) et/ou le véhicule tracteur (10) et/ou d'un trajet planifié sur la base de la topographie du champ.

9. Combinaison selon l'une quelconque des revendications précédentes, dans laquelle l'actionneur (54) est configuré pour régler l'angle d'une barre d'attelage (14) entre le véhicule tracteur (10) et l'instrument (12) par rapport à l'instrument (12) et/ou par rapport au véhicule tracteur (10).
